(19) Europäisches Patentamt / European Patent Office / Office européen des brevets

(11) **EP 2 676 839 B1**

(12) **EUROPEAN PATENT SPECIFICATION**

(45) Date of publication and mention of the grant of the patent:
**16.03.2016 Bulletin 2016/11**

(51) Int Cl.:
**B60Q 1/04** *(2006.01)* **B60Q 1/06** *(2006.01)*
**B62J 6/00** *(2006.01)* **B62J 6/02** *(2006.01)*

(21) Application number: **12191244.8**

(22) Date of filing: **05.11.2012**

(54) **Sub-headlight unit for a vehicle that leans into turns, vehicle that leans into turns, and method for controlling a sub-headlight unit for a vehicle that leans into turns**

Unterscheinwerfereinheit für ein Fahrzeug, das sich in Kurven lehnt, Fahrzeug, das sich in Kurven lehnt und Verfahren zum Steuern einer Unterscheinwerfereinheit für ein Fahrzeug, das sich in Kurven lehnt

Sous-bloc optique pour véhicule qui penche dans les virages, véhicule qui penche dans les virages et procédé pour commander le sous-bloc optique pour véhicule qui penche dans les virages

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.06.2012 JP 2012137041**

(43) Date of publication of application:
**25.12.2013 Bulletin 2013/52**

(73) Proprietor: **Yamaha Hatsudoki Kabushiki Kaisha Iwata-shi, Shizuoka 438-8501 (JP)**

(72) Inventor: **Kosugi, Makoto Iwata-shi, Shizuoka 438-8501 (JP)**

(74) Representative: **Grünecker Patent- und Rechtsanwälte PartG mbB Leopoldstraße 4 80802 München (DE)**

(56) References cited:
**EP-A1- 2 030 880       WO-A1-2007/107935**
**WO-A1-2012/022658   US-A1- 2005 169 001**
**US-A1- 2011 216 548**

**Description**

The present invention relates to a sub-headlight unit for a vehicle that leans into turns, a vehicle that leans into turns, and to a method for controlling a sub-headlight unit for a vehicle that leans into turns.

According to the technical field of motorcycles prior art document WO 2012/022658 A1 discloses a headlight for a two-wheeled vehicle. Said headlight can be turned with regards to the vehicle body. The axis of rotation of the headlight is arranged within the vertical plane of the vehicle in the upright position and preferably at an angle of 45° with regard to the vertical axis. In consideration of such arrangement, it is suggested to rotate the headlight around the axis in consideration of the lean angle of the vehicle in order to compensate for respective displacement of the headlight with regard to the road surface

A further prior art document EP 2 030 880 A1 discloses according to preamble of claim 1; a motorcycle with a main headlight in combination with sub headlights. Said sub headlights are lit when the engine is driven. Said sub headlights are arranged within a specific area adjacent to the front wheel of the motorcycle.

Typically, the operator of a vehicle that leans into turns (for example, straddle-type vehicles such as motorcycles, three-wheelers, snowmobiles, and ATVs (all-terrain vehicles)) uses weight shifts to counter the centrifugal force acting on the vehicle when steering into corners and intersections. As a result, the vehicle turns into a curve by tilting (leaning) inward. On the other hand, vehicles that do not lean into turns such as automobiles are steered into corners and intersections by the operator under the centrifugal force acting on the vehicle. The body of a vehicle that does not lean into turns thus tilts outward on a curve under centrifugal force.

Vehicles that lean into turns involve a large tilt, because the operator actively uses weight shifts to make turns. On the other hand, vehicles that do not lean into turns tilt toward the outside of a curve under centrifugal force. The extent of the tilt depends on the traveling speed of the vehicle and the size (radius) of a curve; however, vehicles that do not lean into turns do not actually use the tilt to make turns. The outward tilting of a vehicles that does not lean into turns on a curve under centrifugal force should preferably be small.

In short, whereas vehicles that lean into turns tilt inward on a curve to a relatively greater extent when turning into corners and intersections, vehicles that do not lean into turns involve a relatively smaller tilt directed toward the outside of a curve.

Vehicles, whether leaning or not leaning into turns, are typically equipped with more than one light: those mainly used to provide visibility to the operator of the vehicle, and those that allow the vehicle to be seen by other road users. Headlights are mainly used to provide visibility to the operator of the vehicle, and are typically switchable between a high beam (driving headlight) and a low beam (passing headlight).

High beams emit light horizontally (upwardly), and provide distant visibility. High beams are typically used in nighttime when other vehicles are not present ahead, in order to prevent dazzling the operators of the vehicles around. On the other hand, low beams emit light downward, and are also used when other vehicles and road users are present ahead. Vehicles thus typically use low beams for traveling.

The illumination range of the headlight light source (low beam) of a vehicle that leans into turns traveling along a straight road is below the horizontal plane including the headlight light source, and spreads forward with a laterally uniform distribution. When entering a left curve, however, the vehicle tilts leftward, and accordingly the illumination range of the headlight light source moves downward to the left. The light thus illuminates a point on the lane more toward the vehicle, and the illumination range becomes smaller inside the curve ahead in the direction of travel.

As a countermeasure, WO2010/061651 proposes a vehicle that includes sub headlights that turn on according to lean angle (the tilt angle of the vehicle into a curve with respect to the upright state), in addition to the main headlight that casts light ahead of the vehicle. In such a vehicle, the reduction of the illumination range inside of a curve can be suppressed by the sub headlights that turn on according to lean angle.

The posture of a vehicle turning corners and intersections is not always identical, and changes depending on such factors as the loading weight of the vehicle, how the curve is taken, the maneuvering of the vehicle by the operator, and road surface conditions (including slope). For example, the vehicle tends to pitch backward when traveling with a passenger or a luggage. Further, a vehicle turning into a curve decelerates, and tends to pitch forward, whereas the vehicle tends to pitch backward out of a curve because of the acceleration. The posture change of the vehicle pitching forward and backward on a curve is smaller when the vehicle decelerates less to pass the curve, whereas the posture change of the vehicle pitching forward and backward on a curve is greater when the vehicle is passing the curve under greater deceleration. The vehicle also has the tendency to pitch backward on an uphill curve, and pitch forward on a downhill curve. In this manner, the posture of a vehicle passing a curve changes depending on the situation, and it is not always possible to reduce the reduction of the illumination range inside of a curve, and appropriately illuminate the target view of the operator with the sub headlight that turns on according to lean angle.

The present invention has been completed in view of the foregoing problems, and it is an object of the present invention to provide a sub-headlight unit for a vehicle that leans into turns, a vehicle that leans into turns, and a method for controlling a sub-headlight unit for a vehicle that leans into turns with which the target view of the operator can be appropriately illuminated while limiting the reduction of the illumination range inside of a curve.

According to the present invention said object is solved by a sub-headlight unit for a vehicle that leans into turns having the features of independent claim 1 and/or by a vehicle that leans into turns having the features of claim 7 and/or a method for controlling a sub-headlight unit for a vehicle that leans into turns having the features of independent claim 8.

Preferred embodiments are laid down in the dependent claims.

Accordingly, it is provided:

A sub-headlight unit for a vehicle that leans into turns, comprising:

a sub headlight light source that casts light forward and outward of the width direction of the vehicle on one side of the width direction of the vehicle;
a control unit for controlling the sub headlight light source;
a first detection unit for detecting a variable used to obtain a lean angle of the vehicle; and
a second detection unit for detecting a variable used to obtain a pitch angle of the vehicle,
wherein the control unit is adapted to turn on the sub headlight light source at a predetermined brightness when the lean angle of the vehicle obtained by using the result of the detection by the first detection unit reaches a reference value, and the control unit is adapted for varying the reference value according to the pitch angle of the vehicle obtained by using the result of the detection by the second detection unit.

Preferably, the control unit is adapted for varying the brightness of the sub headlight light source according to the lean angle of the vehicle.

Preferably, the control unit is adapted for decreasing reference value with increase in a forward pitch angle of the vehicle.

Preferably, the control unit is adapted for increasing the reference value with increase in a backward pitch angle of the vehicle.

Preferably, the sub headlight light source has a cutoff line below a horizontal line of the sub headlight light source after the lean angle of the vehicle reaches a reference value varied according to the pitch angle of the vehicle.

Preferably, the control unit is adapted for varying the reference value according to the pitch angle of the vehicle to reduce the vertical distance between the cutoff line of the sub headlight light source and the horizontal line of the sub headlight light source upon the lean angle of the vehicle reaching the reference value.

Moreover, it is provided a vehicle that comprises the sub-headlight a sub-headlight unit.

Moreover, it is provided a method for controlling a sub-headlight unit for a vehicle that leans into turns, comprising:

casting light forward and outward of the width direction of the vehicle on one side of the width direction of the vehicle by a sub headlight light source,
detecting a lean angle of the vehicle;
detecting a pitch angle of the vehicle,
turning on the sub headlight light source at a predetermined brightness when the lean angle of the vehicle reaches a reference value, and varying said reference value according to the pitch angle of the vehicle.

Preferably, the method for controlling a sub-headlight unit further comprises varying the brightness of the sub headlight light source according to a lean angle of the vehicle.

Preferably, the method for controlling a sub-headlight unit further comprises decreasing the reference value with increase in a forward pitch angle of the vehicle.

Preferably, the method for controlling a sub-headlight unit further comprises increasing the reference value with increase in a backward pitch angle of the vehicle.

Preferably, the sub headlight light source has a cutoff line below a horizontal line of the sub headlight light source after the lean angle of the vehicle reaches a reference value varied according to the pitch angle of the vehicle.

Preferably, the method for controlling a sub-headlight unit further comprises varying the reference value according to the pitch angle of the vehicle to reduce the vertical distance between the cutoff line of the sub headlight light source and the horizontal line of the sub headlight light source upon a lean angle of the vehicle reaching the reference value.

The present invention is illustrated and explained by the following detailed description, which, taken in conjunction with the accompanying drawings, discloses a preferred embodiment.

[Advantages of the Invention]

The present invention enables the target view of the operator to be appropriately illuminated while limiting the reduction of the illumination range inside of a curve.

[Brief Description of the Drawings]

FIG. 1 is a partially enlarged front view schematically illustrating a motorcycle according to an embodiment.
FIG. 2 is a partially enlarged left side view of the motorcycle illustrated in FIG. 1.
FIG. 3 is a block diagram representing a basic configuration of sub headlight light sources of the motorcycle illustrated in FIG. 1.
FIG. 4A is a diagram representing an example of the relationship between lean angle and the brightness of the sub headlight light source of a motorcycle remaining level relative to the longitudinal direction. FIG. 4B is a diagram representing an example of the relationship between lean angle and the brightness of the sub headlight light source of a motorcycle pitching forward. FIG. 4C is a diagram representing an example of the relationship between lean angle and the brightness of the sub headlight light source of a motorcycle pitching backward.
FIG. 5 is a flowchart representing a reference value correction process.
FIG. 6A is a front view schematically representing the screen light distributions of the sub headlight light sources of the motorcycle in the upright state. FIG. 6B is a front view schematically representing the screen light distributions of the sub headlight light sources of the motorcycle leaning to a side and remaining level relative to the longitudinal direction.
FIG. 7A is a front view schematically representing the screen light distributions of the sub headlight light sources of the motorcycle leaning to a side and pitching forward without reference value correction based on pitch angle. FIG. 7B is a front view schematically representing the screen light distributions of the sub headlight light sources of the motorcycle leaning to a side and pitching forward with reference value correction based on pitch angle.
FIG. 8A is a diagram schematically representing the visibility ahead of the motorcycle leaning to a side and remaining level relative to the longitudinal direction. FIG. 8B is a diagram schematically representing the visibility ahead of the motorcycle leaning to a side and pitching forward without reference value correction based on pitch angle. FIG. 8C is a diagram schematically representing the visibility ahead of the motorcycle leaning to a side and pitching forward with reference value correction based on pitch angle.

[Mode for Carrying Our the Invention]

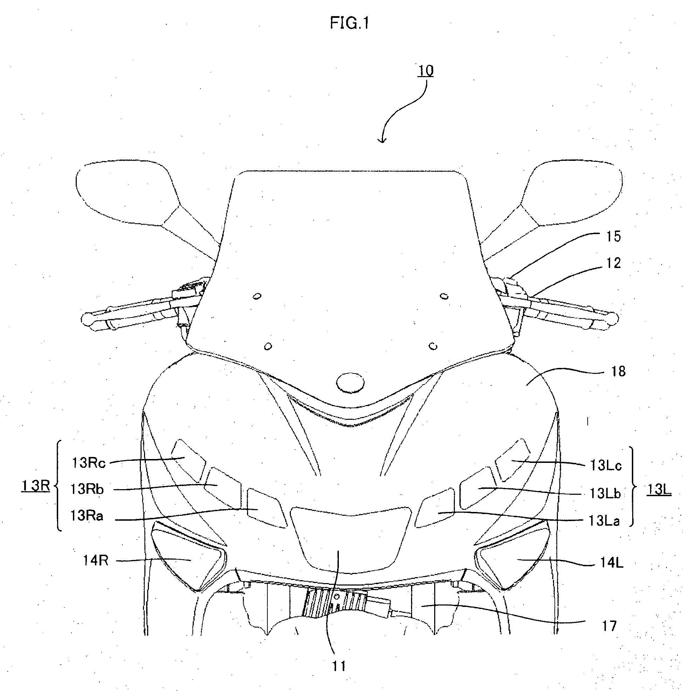

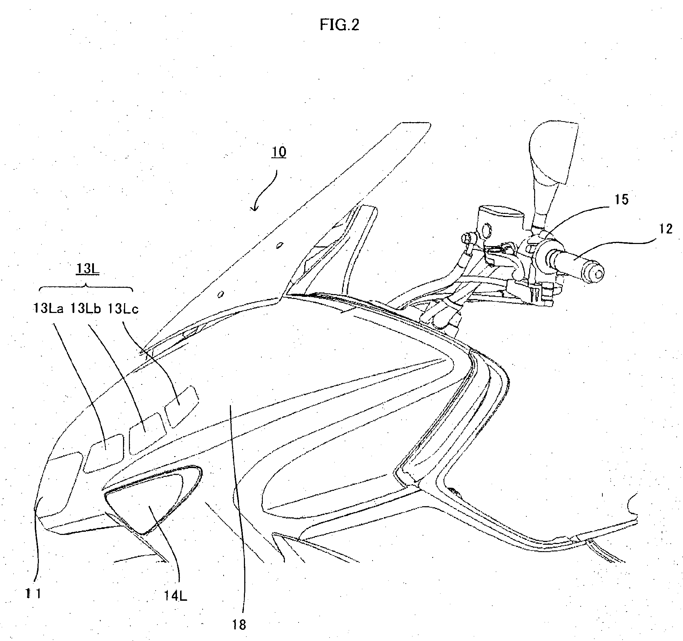

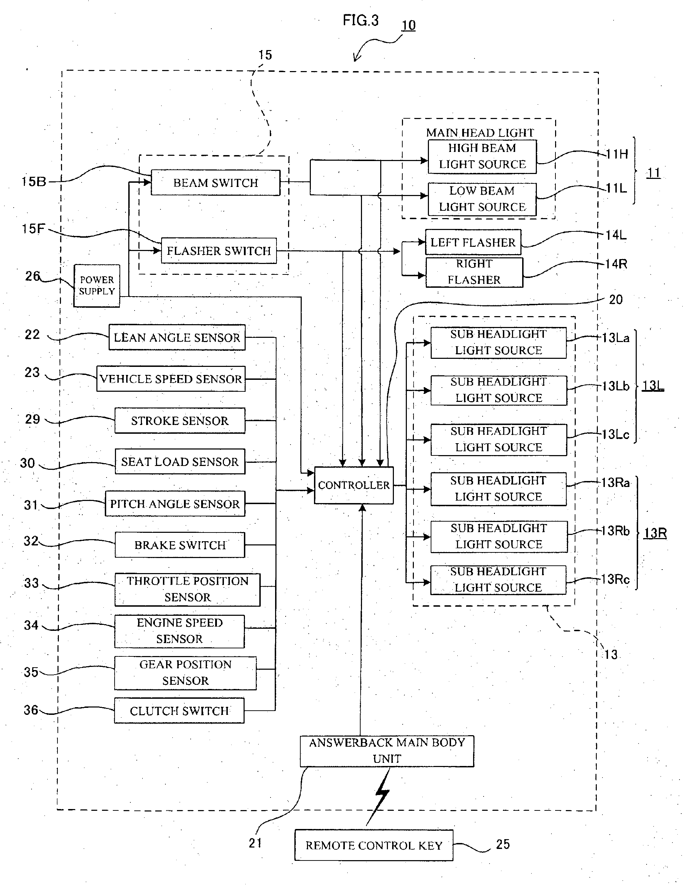

FIG. 1 is a partially enlarged front view schematically illustrating a motorcycle according to an embodiment. FIG. 2 is a partially enlarged left side view of the motorcycle illustrated in FIG. 1.
A motorcycle 10 represents an example of a vehicle that leans into turns of the present teaching. In the present teaching, the vehicle that leans into turns is not particularly limited, and examples include straddle-type vehicles such as motorcycles, three-wheelers, snowmobiles, and ATVs (all-terrain vehicles). In the descriptions below, the terms "longitudinal" and "vertical" are along the traveling direction and the vertical direction, respectively, of the vehicle, and the terms "left" and "right" are with respect to the operator.
The motorcycle 10 has a handle bar 12. An operation switch 15 is disposed on the handle bar 12 on the left side of the width direction of the vehicle. The operation switch 15 includes a beam switch 15B and a flasher switch 15F (see FIG. 3). A steering shaft (not illustrated) is fixed to the handle bar 12 at the middle portion of the width direction of the vehicle. The steering shaft extends downwardly through a head pipe (not illustrated). Front forks 17 are disposed at the lower end side of the steering shaft. A front wheel is rotatably supported on the lower end side of the front forks 17 The head pipe is a component of the vehicle frame. In the present teaching, the vehicle frame is not particularly limited, and may be realized by a structure known in the art.
A front cover 18 is disposed in front of the head pipe through which the steering shaft is disposed. The front cover 18 is at the middle portion of the width direction of the motorcycle 10. A main headlight light source 11 is disposed inside the front cover 18. In the present embodiment, the main headlight light source 11 includes a high beam light source 11 H (driving headlight) and a low beam light source 11L (passing headlight), though not illustrated in FIG. 1. The high beam light source 11 H casts light forward horizontally in front of the motorcycle 10, or upwardly from the horizontal direction. The low beam light source 11L of the motorcycle 10 provides forward and downward light below the horizontal direction.
The motorcycle 10 includes a pair of sub-headlight units 13L and 13R of variable light distribution. The sub-headlight units 13L and 13R are disposed on each side of the width direction of the vehicle.

The sub-headlight unit 13L includes a plurality of sub headlight light sources 13La, 13Lb, and 13Lc. The sub headlight light sources 13La, 13Lb, and 13Lc are arranged in order from the middle portion toward the upper left side relative to the width direction of the vehicle.

The sub-headlight unit 13R includes a plurality of sub headlight light sources 13Ra, 13Rb, and 13Rc. The sub headlight light sources 13Ra, 13Rb, and 13Rc are arranged in order from the middle portion toward the upper right side relative to the width direction of the vehicle.

The light axes of the sub headlight light sources 13La to 13Lc, and 13Ra to 13Rc are fixed, and do not move with lean angle. The reflectors (not illustrated) of the sub headlight light sources 13La to 13Lc and 13Ra to 13Rc are also fixed, and do not move with lean angle. In the present embodiment, the sub headlight light sources are not particularly limited, and, for example, LEDs may be used. Mono-focusing light sources also may be used as the sub headlight light sources. Further, the arrangement of the sub headlight light sources 13La to 13Lc, and 13Ra to 13Rc in the motorcycle 10 is merely an example of the present teaching, and the present teaching is not limited to this example. For example, even though the present embodiment is described through the case where the sub headlight light sources are disposed on the same side (for example, the left side) of the width direction of the vehicle where the sub headlight light sources emit light (the left side), the present teaching is not limited to this example, and the sub headlight light sources may be disposed on the opposite side (for example, the right side) of the side (the left side) where the sub headlight light sources emit light. Further, the sub headlight light sources that emit light on the left side, and the sub headlight light source that emit light on the right side of the width direction of the vehicle may be vertically arranged at the middle portion of the width direction of the vehicle.

The front end of the front cover 18 relative to the longitudinal direction of the vehicle is at the middle of the motorcycle 10. The front cover 18 has a curved surface that is rounded outwardly and extends outward and backward of the front side of the vehicle from the middle portion of the width direction of the vehicle. The sub headlight light sources 13La to 13Lc and 13Ra to 13Rc are disposed along the curved surface of the front cover 18. Flashers 14L and 14R are disposed as direction indicators on each side of the width direction of the motorcycle 10.

FIG. 3 is a block diagram representing a basic configuration of the sub headlight light sources of the motorcycle illustrated in FIG. 1.

The operation switch 15 includes the beam switch 15B and the flasher switch 15F. The beam switch 15B is connected to the high beam light source 11 H and the low beam light source 11L of the main headlight light source 11. The ON/OFF of the high beam light source 11 H and the low beam light source 11 L are switched according to the intended operation of the beam switch 15B by the operator using the beam switch 15B.

The flasher switch 15F is connected to the flashers 14L and 14R. One of the flashers 14L and 14R flashes according to the intended operation of the flasher switch 15F by the operator.

The motorcycle 10 is equipped with a lean angle sensor 22 and a vehicle speed sensor 23. The lean angle sensor 22 and the vehicle speed sensor 23 correspond to a first detection unit of the present teaching. In the present embodiment, the lean angle sensor 22 is a gyroscope that detects the angular velocity around the longitudinal axis of the motorcycle 10, and sends to the controller 20 a signal indicative of the detected angular velocity (roll rate) around the longitudinal axis. The vehicle speed sensor 23 detects the vehicle speed, and sends to the controller 20 a signal indicative of the detected vehicle speed. The controller 20 calculates the lean angle of the motorcycle 10 in motion at each predetermined time point by using the vehicle speed, and the angular velocity around the longitudinal axis.

In the present embodiment, the roll rate is time integrated, and the lean angle is calculated by using the vehicle speed as correction information. However, the lean angle calculation method is not limited to this example in the present teaching. Further, the vehicle speed is not an essential variable in the lean angle calculation. The lean angle may be calculated by using methods known in the art. For example, the lean angle may be calculated by using a steady-state balance equation, using the yaw rate (angular velocity around the vertical axis) and the vehicle speed. Further, the correction information is not limited to vehicle speed. For example, a plurality of gyroscopes and G sensors may be provided, and the values obtained from these sensors, and the vehicle speed may be used as correction information. Further, instead of vehicle speed, GPS positional information and/or geomagnetic information may be used as correction information. The type of sensors (detection units) used for the detection of variables to obtain the lean angle are not particularly limited, and the sensors may be appropriately disposed according to the variables used for the calculations.

The controller 20 is connected to stroke sensors 29 and seat load sensors 30. In the present embodiment, the sensors 29 and 30 are used to obtain a static pitch angle of the motorcycle 10.

The stroke sensors 29 are, for example, linear potentiometers. The stroke sensors 29 are disposed on the front and rear suspensions (not illustrated) to detect stroke lengths. The controller 20 obtains vertical displacements on the front side and the rear side of the vehicle from the amounts of changes in the stroke lengths of the front and rear suspensions. By using the vertical displacements on the front side and the rear side of the vehicle, the controller 20 can calculate the tilt angle relative to the longitudinal direction of the motorcycle 10, specifically, the pitch angle of the motorcycle 10.

The seat load sensors 30 are, for example, strain gauges. The seat load sensors 30 are disposed at the front and rear portions of the seat to detect, for example, a load on the seat. Table data representing the relationships between pitch angles and corresponding loads on the front and rear portions of the seat are pre-stored in the memory (not illustrated) of the controller 20 By referring to the table data, the controller 20 can obtain the pitch angle from the load detected by the seat load sensors 30 at the front and rear portions of the seat.

In the present embodiment, the motorcycle 10 includes the stroke sensors 29 and the seat load sensors 30 to obtain the static pitch angle of the motorcycle 10. However, the static pitch angle of the motorcycle 10 can be calculated by using either one of the stroke sensors 29 and the seat load sensors 30. The static pitch angle of the motorcycle 10 may also be calculated by using both of the stroke sensors 29 and the seat load sensors 30. In this case, the pitch angle obtained by using, for example, the stroke sensors 29 may be corrected using the seat load obtained from the seat load sensors 30.

The controller 20 is also connected to a pitch angle sensor 31, brake switches 32, a throttle position sensor 33, an engine speed sensor 34, a gear position sensor 35, and a clutch switch 36. In the present embodiment, the sensors 31 to 36 are used to obtain an amount of change in the dynamic pitch angle of the motorcycle 10.

The pitch angle sensor 31 is, for example, a gyroscope that detects the angular velocity around the lateral axis of the motorcycle 10, and sends to the controller 20 a signal indicative of the detected angular velocity (pitch rate) around the lateral axis. The controller 20 can then calculate an amount of change in the pitch angle of the motorcycle 10 by time integrating the pitch rate obtained from the pitch angle sensor 31.

The brake switches 32 are provided for the front brake and the rear brake, respectively. The brake switch 32 of the front brake detects the front-wheel braking/non-braking applied by the front brake, and the brake switch 32 of the rear brake detects the rear-wheel braking/non-braking applied by the rear brake.

In the present embodiment, the outputs of the brake switches 32 are used with the output of the vehicle speed sensor 23 for the calculation of an amount of change in the pitch angle of the motorcycle 10.

The outputs of the front and rear brake switches 32 indicate the state of braking (braking/non-braking) at the front wheel and the rear wheel, respectively. With the front braking alone, the front end of the vehicle tends to drop temporarily, whereas this phenomenon is unlikely to occur with the rear braking.

In the present embodiment, table data representing the relationships between amounts of pitch angle changes and corresponding deceleration rates and states of front and rear braking are stored in the memory of the controller 20. Note that, in the present embodiment, the relationships between amounts of pitch angle changes and corresponding deceleration rates and states of front braking and rear braking are set in such a manner that the amounts of forward pitch angle changes at a given deceleration rate satisfy the following relationship. Amount of change by front braking alone > amount of change by front and rear braking > amount of change by rear braking alone.

The controller 20 calculates the deceleration rate (negative acceleration rate) by time differentiating the vehicle speed obtained from the input from the vehicle speed sensor 23. By referring to the table data, the controller 20 can then calculate an amount of change in the pitch angle of the motorcycle 10, using the deceleration rate calculated from the input from the vehicle speed sensor 23, and the state of front and rear braking indicated by the input from the brake switches 32.

Even though the brake switches 32 that detect the states of front and rear braking are used for the calculation of an amount of pitch angle change in the present embodiment, the present teaching is not limited to this example. For example, brake sensors may be provided for the front brake and the rear brake to individually detect braking forces at the front brake and the rear brake. In this case, table data representing the relationships between amounts of pitch angle changes and corresponding deceleration rates and front-brake and rear-brake braking forces are stored in the memory of the controller 20. By referring to the table data, the controller 20 can calculate an amount of the pitch angle change of the motorcycle 10 using the deceleration rate calculated from the input from the vehicle speed sensor 23, and the front-brake and rear-brake braking forces indicated by the inputs from the brake sensors.

The throttle position sensor 33 detects the throttle valve position.

The engine speed sensor 34 detects the engine rotation speed.

The gear position sensor 35 detects the gear position.

The clutch switch 36 detects the disengage/engage of the clutch.

In the present embodiment, the output of the throttle position sensor 33 is used with the outputs of the engine speed sensor 34, the gear position sensor, 35, and the clutch switch 36 for the calculation of an amount of the pitch angle change of the motorcycle 10.

With the throttle valve open for acceleration, the acceleration rate is higher at lower gears than at higher gears at a given throttle valve position. The acceleration rate is higher at higher engine rotation speeds and thus at higher engine outputs, whereas the acceleration rate is lower at lower engine rotation speeds and thus at lower engine outputs. There is no acceleration with the clutch disengaged. The amount of the pitch angle change of the motorcycle 10 pitching backward increases as the acceleration rate increases.

With the throttle valve closed to activate the engine brake, the braking force of the engine brake and the deceleration rate increase at lower gears and at higher engine rotation speeds. On the other hand, the braking force of the engine brake and the deceleration rate decrease at higher gears and at lower engine rotation speeds. With the clutch disengaged, there is no engine brake, and the deceleration rate is zero. The amount of forward pitch angle change increases as the deceleration rate increases.

As described above, there is a correlation between the pitch angle of the motorcycle 10 and the outputs of the throttle position sensor 33, the engine speed sensor 34, the gear position sensor 35, and the clutch switch 36.

In the present embodiment, a data table representing the relationships between amounts of pitch angle changes and corresponding output contents of the sensors 33 to 35 and the switch 36 is stored in the memory of the controller 20. In the data table, the relationships between amounts of pitch angle changes and corresponding output contents of the sensors 33 to 35 and the switch 36 are set according to the foregoing correlations. By referring to the data table, the controller 20 can calculate an amount of the pitch angle change of the motorcycle 10 according to the output contents of the sensors 33 to 35 and the switch 36.

As described above, the motorcycle 10 according to the present embodiment can calculate an amount of dynamic pitch angle change by using the sensors 31 to 36. The controller 20 corrects the static pitch angle by using the amount of dynamic pitch angle change, and corrects the reference value by using the pitch angle so obtained. The sensors 29 to 36 correspond to a second detection unit of the present teaching. Note that sensors known in the art may be used as the sensors 29 to 36. Further, the pitch angle calculation method used in the present embodiment is merely an example of the present teaching, and the present teaching is not limited to this example. For example, the static pitch angle of the vehicle in motion may be measured at predetermined cycles with the stroke sensors 29 or the seat load sensors 30, and the reference value may be varied according to the pitch angle. In other words, the correction using an amount of dynamic pitch angle change is not necessarily required.

The memory of the controller 20 also stores table data for setting the brightnesses of the sub headlight light sources 13La to 13Lc and 13Ra to 13Rc according to lean angle. The table data store a plurality of reference values K (°) for comparison with lean angle. In the present embodiment, the memory stores a plurality of table data that correspond to different pitch angles.

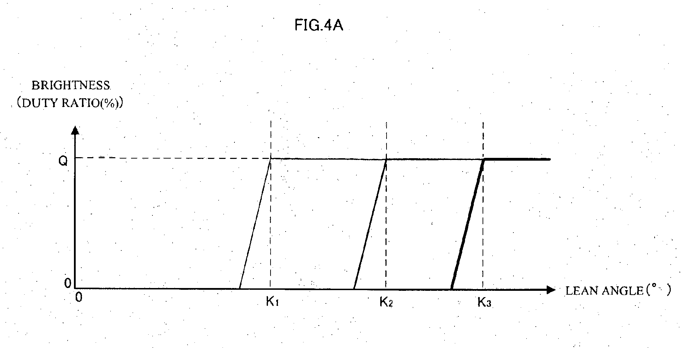

The plurality of table data corresponding to different pitch angles is described below with reference to FIGS. 4A to 4C.

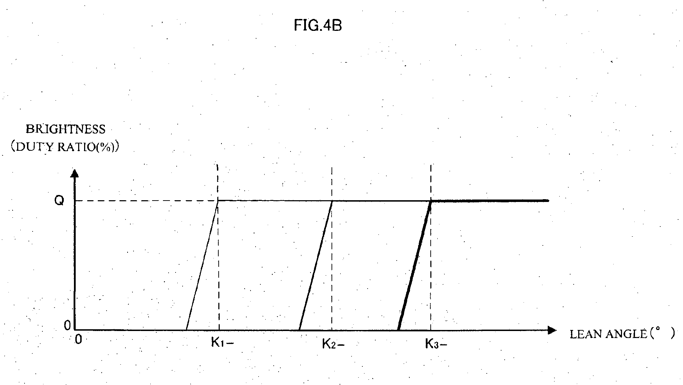

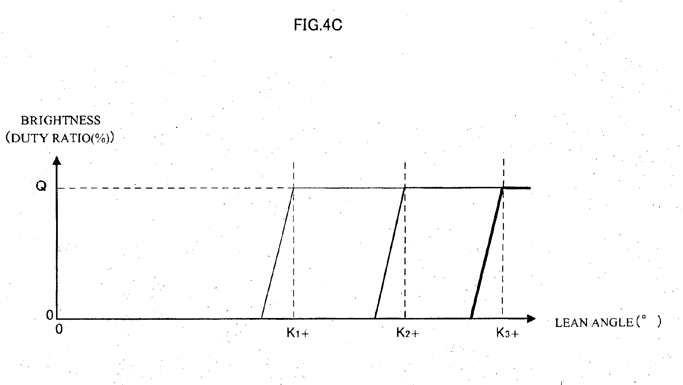

FIG. 4A is a diagram representing an example of the relationship between lean angle and the brightness of the sub headlight light source of a motorcycle remaining level relative to the longitudinal direction. FIG. 4B is a diagram representing an example of the relationship between lean angle and the brightness of the sub headlight light source of a motorcycle pitching forward. FIG. 4C is a diagram representing an example of the relationship between lean angle and the brightness of the sub headlight light source of a motorcycle pitching backward.

As represented in FIG. 4A, for example, reference value $K_n$ is set in the table data referred to when the motorcycle 10 is level in posture relative to the longitudinal direction.

The reference value $K_1$ is assigned to the sub headlight light source 13La.

The reference value $K_2$ is assigned to the sub headlight light source 13Lb.

The reference value $K_3$ is assigned to the sub headlight light source 13Lc.

The sub headlight light sources 13La, 13Lb, and 13Lc turn on at predetermined brightness Q when the leftward lean angle of the motorcycle 10 reaches the reference values $K_1$, $K_2$, and $K_3$. In other words, the lean angle reaches the reference values $K_1$, $K_2$, and $K_3$ in order as the leftward lean angle of the motorcycle 10 increases, and the sub headlight light sources 13La, 13Lb, and 13Lc turn on in order at predetermined brightness Q.

As represented in FIG. 4B, for example, reference value $K_{n-}$ is set in the table data referred to when the motorcycle 10 is pitching forward.

The reference value $K_{1-}$ is assigned to the sub headlight light source 13La.

The reference value $K_{2-}$ is assigned to the sub headlight light source 13Lb.

The reference value $K_{3-}$ is assigned to the sub headlight light source 13Lc.

The sub headlight light sources 13La, 13Lb, and 13Lc turn on at predetermined brightness Q when the leftward lean angle of the motorcycle 10 reaches reference values $K_{1-}$, $K_{2-}$, and $K_{3-}$.

Reference value $K_n$ ($K_1$, $K_2$, $K_3$) and reference value $K_{n-}$ ($K_{1-}$, $K_{2-}$, $K_{3-}$) satisfy the relationship $K_{n-} < K_n$. Thus, the reference value becomes smaller when the table data referred to by the controller 20 is changed from the table data shown in FIG. 4A to the table data shown in FIG. 4B as the motorcycle 10 pitches forward from the level position.

The memory stores more than one table data that are referred to when the motorcycle 10 is pitching forward, and each table data is assigned with a corresponding forward pitch angle of the motorcycle 10. In the table data, smaller reference values are set for larger forward pitch angles of the motorcycle 10. Accordingly, the reference value becomes smaller as the forward pitch angle increases.

Reference value $K_n$ increases in order satisfying $K_1 < K_2 < K_3$. The smaller reference value $K_n$ also increases in order, satisfying $K_{1-} < K_{2-} < K_{3-}$. Accordingly, the sub headlight light sources 13La, 13Lb, and 13Lc turn on in the same order before and after the reference value is decreased from $K_n$ to $K_{n-}$.

As represented in FIG. 4C, for example, reference value $K_{n+}$ is set in the table data referred to when the motorcycle 10 is pitching backward.

The reference value $K_{1+}$ is assigned to the sub headlight light source 13La.

The reference value $K_{2+}$ is assigned to the sub headlight light source 13Lb.

The reference value $K_{3+}$ is assigned to the sub headlight light source 13Lc.

The sub headlight light sources 13La, 13Lb, and 13Lc turn on at predetermined brightness Q when the leftward lean angle of the motorcycle 10 reaches the reference values $K_{1+}$, $K_{2+}$, and $K_{3+}$.

Reference value $K_n$ ($K_1$, $K_2$, $K_3$) and reference value $K_{n+}$ ($K_{1+}$, $K_{2+}$, $K_{3+}$) satisfy the relationship $K_n < K_{n+}$. Thus, the reference value becomes larger when the table data referred to by the controller 20 changes from the table data shown in FIG. 4A to the table data shown in FIG. 4C as the motorcycle 10 pitches backward from the level position.

The memory stores more than one table data that are referred to when the motorcycle 10 is pitching backward, and each table data has a corresponding backward pitch angle of the motorcycle 10. In the table data, larger reference values are set for larger backward pitch angles of the motorcycle 10. Accordingly, the reference value becomes larger as the backward pitch angle increases.

Reference value $K_n$ increases in order, satisfying $K_1 < K_2 < K_3$. The larger reference value $K_{n+}$ also increases in order, satisfying $K_{1+} < K_{2+} < K_{3+}$. Accordingly, the sub headlight light sources 13La, 13Lb, and 13Lc turn on in the same order before and after the reference value is increased from $K_n$ to $K_{n+}$.

In the present embodiment, the brightness of the sub headlight light source gradually increases after the increasing lean angle has reached a value (lower value) smaller than the reference value, and turns on at the predetermined brightness Q when the lean angle reaches the reference value. However, the present teaching is not limited to this example. The sub headlight light source may remain off when the lean angle is below the reference value, and may turn on at the predetermined brightness Q when the lean angle is at or above the reference value.

The sub headlight light sources 13Ra to 13Rc are identical to the sub headlight light sources 13La to 13Lc, except that these are mirror images of each other. The reference values are also set for the sub headlight light sources 13Ra to 13Rc as for the sub headlight light sources 13La to 13Lc.

Referring to FIG. 3, a power supply 26 is connected to the high beam light source 11 H and the low beam light source 11 L via the beam switch 15B. The power supply 26 is connected to the flashers 14L and 14R via the flasher switch 15F. The power supply 26 is also connected to the controller 20. The controller 20 is connected to an answerback main body unit 21. The answerback main body unit 21 receives signal waves from a remote control key 25.

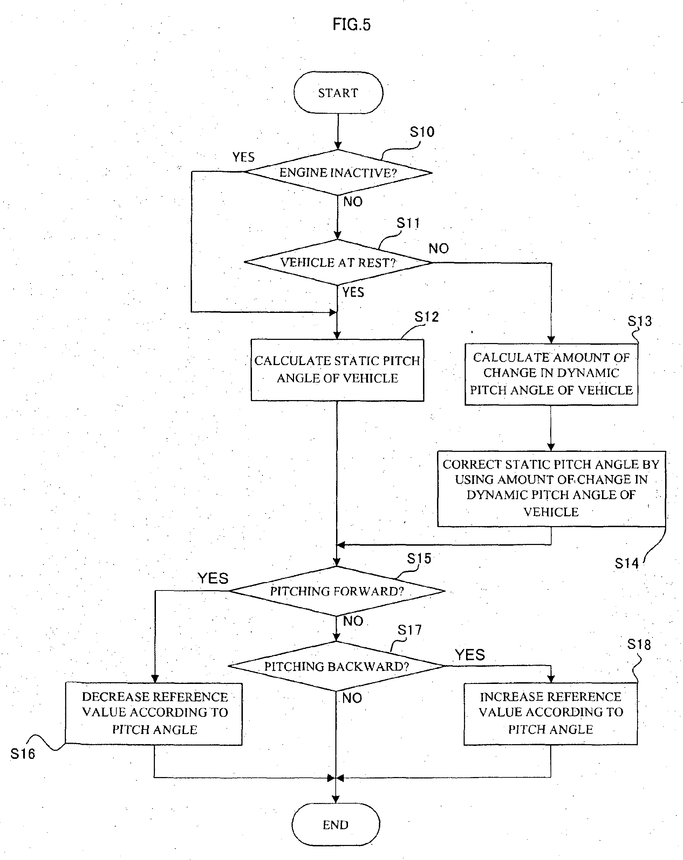

FIG. 5 is a flowchart representing a reference value correction process. The reference value correction process is a process performed by the controller 20 (control unit) in predetermined cycles.

First, in the reference value correction process, the controller 20 determines whether or not the engine is inactive (step S10).

The controller 20 determines that the engine is not running, for example, when the engine rotation speed is at or below a predetermined value, by using the result of the detection by the engine speed sensor 34. In the present teaching, the engine may be determined as not running when the engine rotation speed remains at or below a predetermined value for a predetermined time period.

If it is determined that the engine is inactive (step S10: YES), the sequence goes to step S12, whereas the sequence goes to step S11 if it is determined that the engine is not inactive (step S10: NO).

If it is determined in step 510 that the engine is not inactive, the controller 20 determines whether or not the motorcycle 10 is at rest (step S11).

The controller 20 determines that the motorcycle 10 is at rest when the vehicle speed is at or below a predetermined value, for example, using the result of detection from the vehicle speed sensor 23. In the present teaching, the motorcycle 10 may be determined as being at rest when the vehicle speed remains at or below a predetermined value for a predetermined time period.

If it is determined that the motorcycle 10 is at rest (step S11: YES), the sequence goes to step S12, whereas the sequence goes to step S13 if it is determined that the motorcycle 10 is not at rest (step S11: NO).

If it is determined in step S10 that the engine is not running, or in step S11 that the motorcycle 10 is at rest, the controller 20 calculates the static pitch angle of the motorcycle 10 (step S12).

The controller 20 calculates the static pitch angle of the motorcycle 10, for example, by using the result of the detection by at least one of the stroke sensors 29 and the seat load sensors 30. The calculated pitch angle value of the motorcycle 10 is stored in the memory.

After the calculation of the static pitch angle of the motorcycle 10, the sequence goes to step S15.

If it is determined in step S11 that the motorcycle 10 is not at rest, the controller 20 calculates an amount of change in the dynamic pitch angle of the motorcycle 10 (step S13).

As described above, the controlled 20 may calculate an amount of pitch angle change by the time integration of the pitch rate obtained from the pitch angle sensor 31, or by using the outputs of the brake switches 32 and the vehicle speed sensor 23, or the outputs of the throttle position sensor 33, the engine speed sensor 34, the gear position sensor 35, and the clutch switch 36.

The sequence goes to step S14 after the calculation of an amount of change in the dynamic pitch angle of the motorcycle 10.

After step S13, the controller 20 corrects the static pitch angle of the motorcycle 10 measured when the vehicle was at rest, by using the amount of change in the dynamic pitch angle of the motorcycle 10 (step S14).

The static pitch angle of the motorcycle 10 calculated in step S12 is stored in the memory, and the controller 20 in step S14 corrects the pitch angle stored in the memory, and stores the corrected pitch angle in the memory. When the processing of step S14 is conducted in the subsequent reference value correction process, the pitch angle corrected and stored in the memory is corrected by using an amount of dynamic pitch angle change.

The sequence goes to step S15 after the correction of the pitch angle.

After step S12 or S14, the controller 20 determines whether or not the motorcycle 10 is pitching forward, by using the pitch angle of the motorcycle 10 (step S15). In the present embodiment, the motorcycle 10 is determined as pitching forward when the pitch angle of the motorcycle 10 is at or above the predetermined forward pitch angle $\theta f$ (°).

If it is determined that the motorcycle 10 is pitching forward (step S15: YES), the sequence goes to step S16, whereas the sequence goes to step S17 if it is determined that the motorcycle 10 is not pitching forward (step S15: NO).

If it is determined in step S15 that the motorcycle 10 is pitching forward, the controller 20 decreases the reference value (step S16).

The controller 20 decreases the reference value, for example, by changing the currently referring table data to table data containing smaller reference values (see FIG. 4B). Here, table data containing smaller reference values are selected for greater forward pitch angles of the motorcycle 10. This ensures that the reference value decreases as the forward pitch angle increases.

The reference value correction process ends after the reference value is decreased.

If it is determined in step S15 that the motorcycle 10 is not pitching forward, the controller 20 determines whether or not the motorcycle 10 is pitching backward, by using the pitch angle of the motorcycle 10 (step S17). In the present embodiment, the motorcycle 10 is determined as pitching backward when the pitch angle of the motorcycle 10 is at or below the predetermined forward pitch angle $-\theta b$ (°).

If it is determined that the motorcycle 10 is pitching backward (step S17: YES), the sequence goes to step S18. The reference value correction process ends if it is determined that the motorcycle 10 is not pitching backward (step S17: NO).

If it is determined in step S17 that the motorcycle 10 is pitching backward, the controller 20 increases the reference value (step S18).

The controller 20 increases the reference value, for example, by changing the currently referring table data to table data containing larger reference values (see FIG. 4C). Here, table data containing larger reference values are selected for greater backward pitch angles of the motorcycle 10. This ensures that the reference value increases as the backward pitch angle increases.

The reference value correction process ends after the reference value is increased.

In the present embodiment, the reference value is not varied according to pitch angle when the pitch angle of the motorcycle 10 falls within a predetermined range including the pitch angle 0° (above the forward pitch angle $-\theta b$ (°) and below the forward pitch angle $\theta f$ (°)); whereas the reference value is varied according to pitch angle when the pitch angle of the motorcycle 10 is outside of the predetermined range: However, the present teaching is not limited to this example. Specifically, the pitch angle range in which the correction of the reference value according to pitch angle is not performed may be set as in the present embodiment, or may not be set. Further, the reference value change according to pitch angle may be either continuous or stepwise. For example, the reference value can be continuously varied by making the pitch angle intervals of changing the table data smaller.

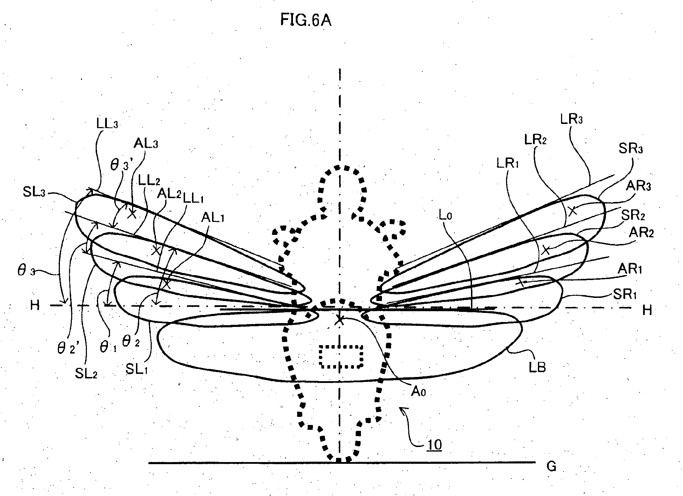

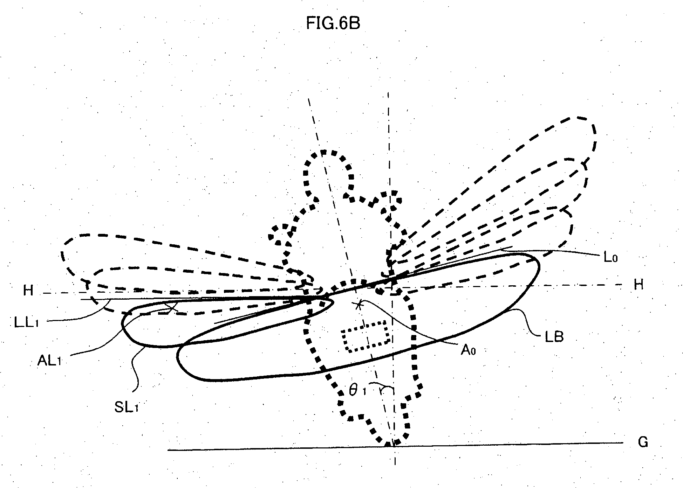

FIG. 6A is a front view schematically representing the screen light distributions of the sub headlight light sources of the motorcycle in the upright state. FIG. 6B is a front view schematically representing the screen light distributions of the sub headlight light sources of the motorcycle leaning to a side and remaining level relative to the longitudinal direction:

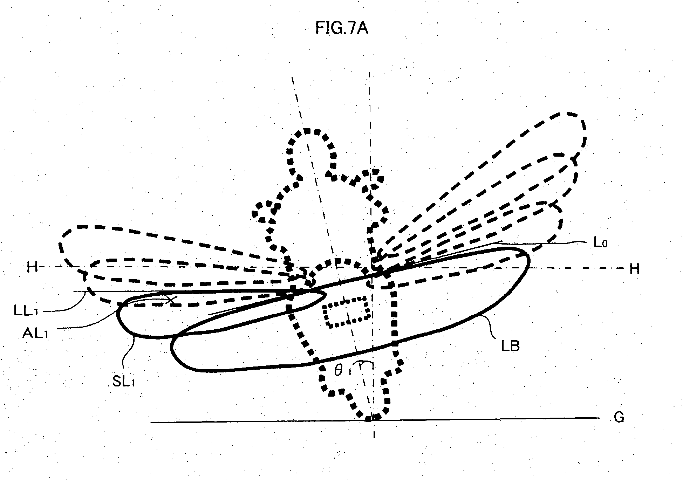

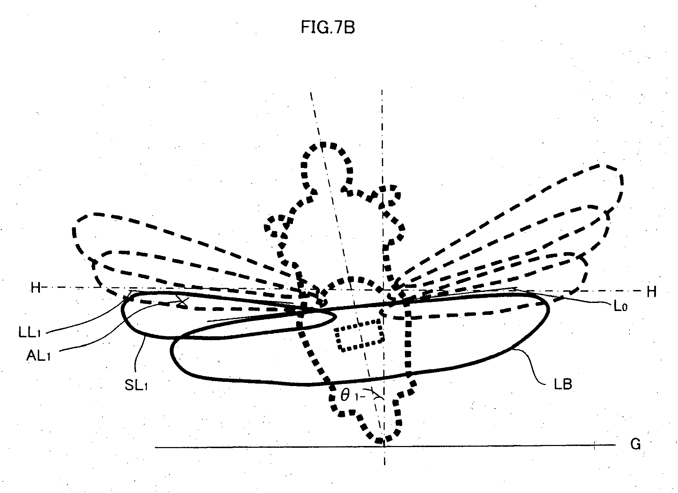

FIG. 7A is a front view schematically representing the screen light distributions of the sub headlight light sources of the motorcycle leaning to a side and pitching forward without reference value correction based on pitch angle. FIG. 7B is a front view schematically representing the screen light distributions of the sub headlight light sources of the motorcycle leaning to a side and pitching forward with reference value correction based on pitch angle.

In FIG. 6A, the motorcycle 10 is standing upright with respect to a flat ground G, and is level in posture relative to the longitudinal direction. The low beam light source 11L has an illumination range LB of a predetermined illuminance below the horizontal line H, and spreads sideways in a laterally uniform distribution in the width direction of the vehicle. The light axis $A_0$ of the low beam light source 11 L is below the horizontal line H in the illumination range LB. The cutoff line $L_0$ of the low beam light source 11L is the upper edge of the illumination range LB, and spreads horizontally along the width direction of the vehicle above the light axis $A_0$ and below the horizontal line H. The illumination range LB of the low beam light source 11L covers both the left side and the right side relative to the width direction of the vehicle.

The sub headlight light sources 13La, 13Lb, and 13Lc have mutually overlapping illumination ranges $SL_1$, $SL_2$,

and SL$_3$ arranged in order from the middle portion toward the upper left side relative to the width direction of the vehicle. Specifically, the vertical positions of the illumination ranges SL$_1$, SL$_2$, and SL$_3$ of the sub headlight light sources 13La, 13Lb, and 13Lc become higher in the same order the low-beam reference values K$_1$, K$_2$, and K$_3$ increase.

The light axes AL$_1$ to AL$_3$ of the sub headlight light sources 13La to 13Lc are inside of the illumination ranges SL$_1$, SL$_2$, and SL$_3$, and are directed outward of the width direction of the vehicle in this order. The light axes AL$_1$ to AL$_3$ of the sub headlight light sources 13La to 13Lc are above the light axis A$_0$ of the low beam light source 11L.

The cutoff lines LL$_1$ to LL$_3$ of the sub headlight light sources 13La to 13Lc are confined as a whole within the space above the horizontal line H.

The tilt angles θ$_1$ to θ$_3$ of the cutoff lines LL$_1$ to LL$_3$ of the sub headlight light sources 13La to 13Lc increase in this order.

The tilt angles θ$_1$ to θ$_3$ of the cutoff lines LL$_1$ to LL$_3$ of the sub headlight light sources 13La to 13Lc are spaced apart from each other from 0° to θ$_1$, θ$_2$, and θ$_3$, in this order. The interval between 0° and θ$_1$ is θ$_1$. The intervals θ$_1$, θ$_2$', and θ$_3$' satisfy the relationship θ$_1$ > θ$_2$' > θ$_3$', where θ$_2$' is the interval between θ$_2$ and θ$_1$, and θ$_3$' is the interval between θ$_3$ and θ$_2$. In the present teaching, the intervals θ$_1$, θ$_2$', and θ$_3$' are not limited to this example, and may be regular intervals, specifically θ$_1$ = θ$_2$' = θ$_3$'.

Note that explanations for the sub headlight light sources 13Ra to 13Rc will be omitted, because the sub headlight light sources 13Ra to 13Rc are identical to the sub headlight light sources 13La to 13Lc, except that these are mirror images of each other.

In the present embodiment, θ$_1$, θ$_2$, and θ$_3$ (°) are set for the reference values K$_1$, K$_2$, and K$_3$, respectively, at which the sub headlight light sources 13La, 13Lb, and 13Lc turn on. Thus, the sub headlight light sources 13La to 13Lc and 13Ra to 13Rc are OFF when the motorcycle 10 is traveling in the upright state (θ = 0°). When the lean angle reaches K$_1$ (θ$_1$) as the motorcycle 10 at a level position relative to the longitudinal direction tilts to one side (the left side in FIGS. 6A and 6B) of the width direction of the vehicle (FIG. 6B), the sub headlight light source 13La disposed on the same side (the left side) as the lean direction of the motorcycle 10 turns on. Here, the cutoff line LL$_1$ is horizontal.

When the lean angle increases further and reaches K$_2$ (θ$_2$), the sub headlight light source 13Lb turns on, and the cutoff line LL$_2$ becomes horizontal. The sub headlight light source 13Lc turns on, and the cutoff line LL$_3$ becomes horizontal when the lean angle increases further and reaches K$_3$ (θ$_3$).

Suppose that the motorcycle 10 pitching forward tilts leftward, and the lean angle of the motorcycle 10 reaches the reference value K$_1$ without reference value correction based on pitch angle. In this case, as shown in FIG. 7A, the illumination range LB of the low beam light source 11 L, and the illumination range SL$_1$ of the sub headlight light source 13La are below the illumination ranges LB and SL$_1$ shown in FIG. 6B. Further, the cutoff line LL$_1$ of the sub headlight light source 13La shown in FIG. 7A is below the cutoff line LL$_1$ of the sub headlight light source 13La shown in FIG. 6B. This may cause difficulties in appropriately emitting light over a long distance from the sub headlight light source 13La.

In contrast, in the present embodiment, the reference value is corrected according to pitch angle, and therefore the sub headlight light source 13La turns on at predetermined brightness Q when the lean angle reaches the reference value K$_{1\_}$ as the motorcycle 10 pitching forward tilts leftward. The sub headlight light source 13La turns on early, because the reference value K$_{1\_}$ is smaller than the reference value K$_1$, and the lean angle θ$_{1\_}$ is smaller than lean angle θ$_1$. As a result, as shown in FIG. 7B, the illumination range LB of the low beam light source 11 L, and the illumination range SL$_1$ of the sub headlight light source 13La are above the illumination ranges LB and SL$_1$ shown in FIG. 7A. Further, the cutoff line LL$_1$ of the sub headlight light source 13La shown in FIG. 7B is above the cutoff line LL$_1$ of the sub headlight light source 13La shown in FIG. 7A. This makes it possible to appropriately emit light over a long distance from the sub headlight light source 13La.

In the present teaching, the light axis is the straight line that passes the light source and the center of the maximum illuminance portion of the emitted light. The center of the maximum illuminance portion of the emitted light can be specified by casting light from the light source onto a screen disposed in front of the light source. This screen illuminance test can be performed according to the method specified by JIS D1619. The cutoff line and the illumination range of a predetermined illuminance also can be specified from the results of the screen illuminance test (for example, from an iso-illuminance distribution chart). Further, the cutoff line and the illumination range of a predetermined illuminance in planar view can be specified from a road surface light distribution converted from the result of the screen illuminance test. The conversion into a road surface light distribution can be performed by using a method known in the art. Specifically, a screen illuminance value may be converted into a road surface illuminance value by common plotting and geometric calculations. In this case, the following equation (I) may be used.

$$\text{Road surface illuminance (Lx)} = \text{screen illuminance (Lx)} \times [(\text{distance between D and F (m)})/(\text{distance between D and E (m)})]^2 \qquad (I),$$

where D is the light source, E is a point on the road surface, and F is the intersection between a screen disposed between D and E and the line connecting D to E.

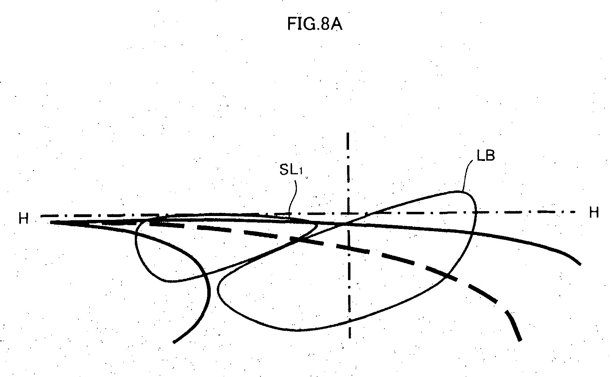

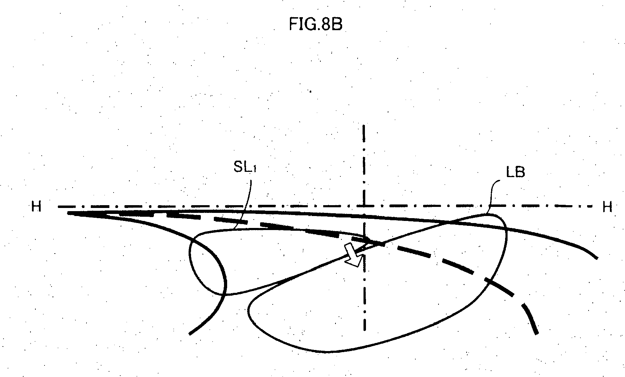

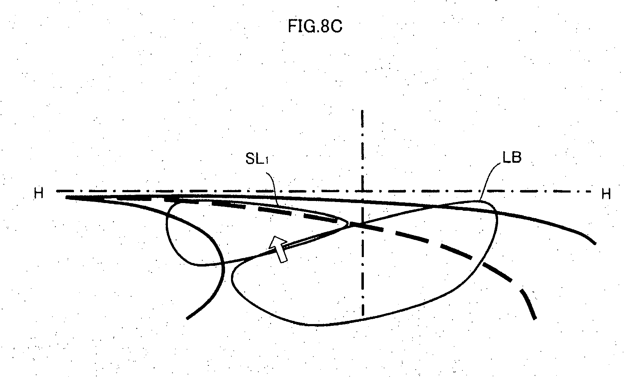

FIG. 8A is a diagram schematically representing the visibility ahead of the motorcycle leaning to a side and remaining level relative to the longitudinal direction. FIG. 8B is a diagram schematically representing the visibility ahead of the motorcycle leaning to a side and pitching forward without reference value correction based on pitch angle. FIG. 8C is a diagram schematically representing the visibility ahead of the motorcycle leaning to a side and pitching forward with reference value correction based on pitch angle.

When the lean angle to the left of the motorcycle 10 reaches the reference value $K_1$ as the motorcycle 10 tilts leftward while remaining level relative to the longitudinal direction, the sub headlight light source 13La turns on at predetermined brightness Q. As shown in FIG. 8A, the illumination range LB of the low beam11L tilts leftward and downward as the leftward lean angle of the motorcycle 10 increases. Accordingly, the far side of the curve ahead in the direction of travel falls outside of the illumination range LB. However, the far side of the curve ahead in the direction of travel is covered by the illumination range $SL_1$ of the sub headlight light source 13La.

Suppose that the motorcycle 10 pitching forward tilts leftward, and the lean angle of the motorcycle 10 reaches the reference value without reference value correction based on pitch angle. In this case, as shown in FIG. 8B, the illumination range LB of the low beam11L, and the illumination range $SL_1$ of the sub headlight light source 13La are below the positions shown in FIG. 8A. As a result, the far side of the curve ahead in the direction of travel falls outside of the illumination ranges LB and $SL_1$.

However, in the present embodiment, the reference value is corrected according to pitch angle, and thus the sub headlight light source 13La turns on at predetermined brightness Q when the lean angle of the motorcycle 10 reaches the reference value $K_{1-}$ as the motorcycle 10 pitching forward tilts leftward. The sub headlight light source 13La turns on early, because the reference value $K_{1-}$ is smaller than the reference value $K_1$. As a result, as shown in FIG. 8C, the illumination range $SL_1$ of the sub headlight light source 13La covers the far side of the curve ahead in the direction of travel. This makes it possible to appropriately provide illumination on the target view (far side of the curve) of the operator while limiting the reduction of the illumination range inside of the curve.

As described above, in the present embodiment, because the reference value varies according to the pitch angle of the motorcycle 10, the illumination range $SL_1$ of the sub headlight light source 13La is suppressed from shifting out of position from the target view of the operator, as shown in FIG. 8C.

Further, in the present embodiment, the reference value is decreased with increase in forward pitch angle. This suppresses the illumination range $SL_1$ of the sub headlight light source 13La from approaching closer to the motorcycle 10 as the vehicle pitches forward, and more distant illumination can be provided, as shown in FIG. 8C.

Further, in the present embodiment, the reference value is increased with increase in backward pitch angle as the motorcycle 10 pitches backward. This makes it possible to delay the ON timing of the sub headlight light source, and to suppress the light from unnecessarily illuminating the space above the horizontal line H.

The present embodiment has been described through the case where the reference value is decreased with increase in forward pitch angle, and is increased with increase in backward pitch angle. However, only one of these measures may be taken in the present teaching. Specifically, the reference value may be decreased with increase in forward pitch angle, without correcting the reference value according to increase of the backward pitch angle.

Further, in the present embodiment, the cutoff line $LL_1$ of the sub headlight light source 13La is below the horizontal line H after the lean angle of the motorcycle 10 has reached the reference value $K_{1-}$ varied according to the pitch angle of the motorcycle 10, as shown in FIG. 7B. This makes it possible to suppress the light from unnecessarily illuminating the space above the horizontal line H while providing more distant illumination, as shown in FIG. 8C.

In the present embodiment, the cutoff line $LL_1$ of the sub headlight light source 13La is also below the horizontal line H after the lean angle has reached the reference value $K_{1+}$, though not shown in the drawings. That is, in the present embodiment, the cutoff lines of the sub headlight light sources are below the horizontal line after the lean angle has reached the reference value, regardless of whether the reference value was decreased with increase in the forward pitch angle of the motorcycle 10, or increased with increase in the backward pitch angle of the motorcycle 10.

Further, in the present embodiment, as shown in FIGS. 7A and 7B, the reference value is varied according to the pitch angle of the motorcycle 10 to reduce the vertical distance between the cutoff line $LL_1$ of the sub headlight light source 13La and the horizontal line H upon the lean angle of the motorcycle 10 reaching the reference value. Specifically, the vertical distance (minimum distance) between the cutoff line $LL_1$ and the horizontal line H shown in FIG. 7B is shorter than the vertical distance between the cutoff line $LL_1$ and the horizontal line H shown in FIG. 7A. This makes it possible to suppress the light from unnecessarily illuminating the space above the horizontal line H while providing more distant illumination.

The foregoing embodiment described the case where three sub headlight light sources cast light on one side of the width direction of the vehicle. However, in the present teaching, the number of sub headlight light sources that cast light on one side of the width direction of the vehicle is not particularly limited, and only a single sub headlight light source, or more than one sub headlight light source may be provided to cast light on one side of the width direction of the vehicle.

The foregoing example described the case where the same values are set for the tile angles ($\theta_1$ to $\theta_3$) of the cutoff lines ($LL_1$ to $LL_3$) of the sub headlight light sources (13La to 13Lc) and for the reference values $K_n$ set for the sub headlight light sources (13La to 13Lc). However, the numerical values (angles) may be different. As used herein, "same values" also means that the values are essentially the same.

In the present embodiment, the sub headlight light sources 13La to 13Lc, 13Ra to 13Rc are LEDs, and the controller 20 controls (modulates) the brightness by adjusting the duty ratio by pulse width modulation (PWM). The method used to modulate the sub headlight light sources is not particularly limited, and, for example, the current or voltage sent to the sub headlight light sources may be controlled.

Further, a single sub headlight light source may be realized by a plurality of light sources of different brightnesses. In this case, these light sources may be switchably turned on to modulate the sub headlight light source. For example, when a single sub headlight light source includes a plurality of light sources of different brightnesses, the brightnesses of the light sources can be controlled by switchably turning on the light sources.

It is also possible to realize a single sub headlight light source by a plurality of light sources. In this case, the sub headlight light source may be modulated by turning on the light sources in different numbers or in different combinations. The light sources may have the same or different brightnesses.

The motorcycle 10 of the present embodiment includes the sub-headlight units 13L and 13R disposed on each side of the width direction of the vehicle. However, the present teaching is not limited to this example. For example, a single sub-headlight unit may be realized as the integral unit of the sub-headlight units 13L and 13R disposed on each side of the width direction of the vehicle.

Further, in the present teaching, the sub-headlight unit may be a physically integral unit, or the sub headlight light sources in the sub-headlight unit may be physically separated.

Further, in the present embodiment, the sub-headlight units 13L and 13R are separately provided from the main headlight light source 11. However, the present teaching is not limited to this example, and the sub-headlight units may be integrally provided with the main headlight light source. In this case, the sub-headlight units include the main headlight light source.

The foregoing embodiment described the case where three sub headlight light sources cast light on one side of the width direction of the vehicle. However, in the present teaching, the number of sub headlight light sources that cast light on one side of the width direction of the vehicle is not limited to three, provided that at least one sub headlight light source is provided to cast light on one side of the width direction of the vehicle.

The lean angle sensor 22 and the vehicle speed sensor 23 correspond to the first detection unit that detects a variable used to obtain the lean angle of the motorcycle 10. In the present embodiment, the first detection unit includes the lean angle sensor 22 and the vehicle speed sensor 23. However, the present teaching is not limited to this example, and, for example, the first detection unit may include only the lean angle sensor 22, and not the vehicle speed sensor 23. The controller 20 corresponds to the control unit of the present teaching. However, the hardware configuration is not limited to this example in the present teaching. The control unit determines whether the lean angle of the motorcycle 10 has reached the reference value, using the variables detected by the first detection unit. Here, the control unit is not necessarily required to calculate the lean angle, and the specific processing performed by the control unit is not particularly, limited. For example, data of a table that correlates the angular velocity (roll rate) and vehicle speed to the result of whether the lean angle has reached the reference value may be stored in the memory of the controller 20 provided as the control unit. In this case, the control unit can refer to the table based on angular velocity and vehicle speed to determine whether the lean angle has reached the reference value, without calculating the lean angle.

In the present embodiment, the lean angle is the tilt angle of the vehicle leaning into a curve, relative to the upright state (vertical direction). However, the present teaching is not limited to this example, and the lean angle of the vehicle leaning into a curve may be a tilt angle relative to the direction perpendicular to the road surface. When the tilt angle of the vehicle leaning into a curve is relative to the direction perpendicular to the road surface, the tilt angle may be measured by using methods and devices known in the art. Further, in the present embodiment, the pitch angle is the tilt angle of a vehicle pitching forward or backward relative to the level state. However, the present teaching is not limited to this example, and the pitch angle may be the tilt angle of a vehicle pitching forward or backward relative to the road surface. The tilt angle of a vehicle pitching forward or backward relative to the road surface may be measured by using methods and devices known in the art.

Further, in the present embodiment, the sub-headlight unit is described as being separately provided from the control unit (controller 20) and from the first detection unit (lean angle sensor 22 and vehicle speed sensor 23) and the second detection unit (sensors 29 to 36). However, the present teaching is not limited to this example. The sub-headlight unit may include at least one of the control unit, the first detection unit, and the second detection unit.

The present embodiment has been described through the case where the sub headlight light source turns on according to lean angle. However, the sub headlight light source may be configured so that the function of lighting up according to lean angle is manually switched ON/OFF. Note here that even in this case the sub headlight light source turns on according to lean angle, not manually. On the other hand, the ON/OFF of the flashers are manually switched. This distinguishes the sub headlight light source from the flashers.

The sub headlight light source may be adapted to receive manually input ON/OFF instructions. In this case, the brightness of the sub headlight light source turns on according to lean angle in the absence of the instructions, whereas, in the presence of the instructions, the sub headlight light source is turned on and off according to the instructions. Even in this case, the sub headlight light source still functions to turn on according to lean angle, and distinguishes itself from the flashers.

In the present teaching, "turning on" the sub headlight light source according to lean angle is not necessarily limited to directly bringing the sub headlight light source to the ON state from the OFF state according to lean angle, and may include gradually bringing the sub headlight light source to the ON state from the OFF state according to lean angle. Further, gradually bringing the sub headlight light source to the ON state from the OFF state according to lean angle includes both continuously bringing the sub headlight light source to the ON state from the OFF state, and bringing the sub headlight light source to the ON state from the OFF state in a stepwise fashion. Further, the ON state is not limited to the full ON state at the rated output, and may include the dim ON state in which the output is controlled below the output in the full ON state. Further, the output in the full ON state may exceed the rated output (for example, the light may be turned on at the maximum output). The output in the dim ON state exceeds the OFF-state output. Turning on the sub headlight light source according to lean angle may include achieving a predetermined brightness brighter than in the OFF state according to lean angle.

Specifically, "turning on" the sub headlight light source according to lean angle may include the following (ii) to (iv), and is not limited to (i).

> (i) The sub headlight light source is directly or gradually brought to the full ON state from the OFF state according to lean angle.
> (ii) The sub headlight light source is directly or gradually brought to the dim ON state from the OFF state according to lean angle.
> (iii) The sub headlight light source is directly or gradually brought to the full ON state from the dim ON state according to lean angle.
> (iv) The sub headlight light source is directly or gradually brought to a second dim ON state from a first dim ON state according to lean angle. (The brightness is higher in the second dim ON state than in the first dim ON state.)

When the sub headlight light source is a light source (for example, an LED) that uses pulse width modulation for the brightness control, turning on the sub headlight light source according to lean angle may include continuously or gradually varying the duty ratio of the sub headlight light source from zero to higher values (above 0) according to lean angle.

The present embodiment has been described through the case where the sub headlight light source turns on according to lean angle. The sub headlight light source turns on according to lean angle to mainly provide light for the visibility of the operator of the vehicle. As such, the sub headlight light source is not necessarily required to turn on according to lean angle under bright conditions such as in daytime.

In the present teaching, the lean angle value of when the brightness of the sub headlight light source varies is adjusted according to the pitch angle of the vehicle.

As a rule, the main headlight (high beam light source or low beam light source) mainly provides light for the visibility of the operator, and needs to be turned on at all times when traveling under poor visibility conditions (for example, such as in nighttime). It is therefore necessary to adjust the direction and/or position of the light if the always-on main headlight were to be used to appropriately illuminate the target view of the operator.

On the other hand, the brightness of the sub headlight varies according to lean angle, despite that the sub headlight mainly provides light for the visibility of the operator. The sub headlight thus allows for the adjustment of not only the light direction and position, but the timing at which the brightness varies (specifically, the lean angle value of when the brightness varies). In other words, because of its characteristic that the brightness varies according to lean angle, the sub headlight has another adjustable parameter, specifically the lean angle value of when the brightness varies, in addition to the light direction and position adjusted in the main headlight.

The present inventors found that the lean angle value of when the brightness of the sub headlight light source varies can be adjusted according to the pitch angle of the vehicle to appropriately illuminate the target view of the operator, and that the actuator can be omitted as a result.

As described above, the operator of a vehicle that leans into turns actively uses weight shifts to make turns, and thus there is a very strong demand for making the vehicle lighter and smaller. The present teaching is advantageous for vehicles that lean into turns, because the actuator can be omitted, and there is no need to provide an installation space for the actuator, and a range of motion for the sub headlight light source. Another advantage is the excellent response, because the pitch angle changes can be dealt with by the internal process of varying the reference value.

The present embodiment has the following configurations.

(1) A sub-headlight unit for a vehicle that leans into turns,
the sub-headlight unit comprising:

a sub headlight light source that casts light forward and outward of the width direction of the vehicle on one side of the width direction of the vehicle,
wherein the brightness of the sub headlight light source is varied according to a lean angle of the vehicle, and
wherein the sub headlight light source turns on at a predetermined brightness when the lean angle of the vehicle reaches a reference value, the reference value being varied according to a pitch angle of the vehicle.

According to the configuration of (1), the sub headlight light source turns on at a predetermined brightness when the lean angle of the vehicle reaches a reference value, and the reference value varies according to the pitch angle of the vehicle (the angle at which the vehicle longitudinally rotates about an axis extending in the width direction of the vehicle). In this way, the illumination range of the sub headlight light source that turns on at a predetermined brightness according to lean angle can be suppressed from shifting out of position from the target view of the operator as a result of the changing postures of the vehicle. This makes it possible to appropriately illuminate the target view of the operator while limiting the reduction of the illumination range inside of a curve.

(2) The sub-headlight unit of (1), wherein the reference value decreases with increase in a forward pitch angle of the vehicle.

The sub headlight light source of the vehicle pitching forward is below where the sub headlight light source is in the level position, whereas the position of the sub headlight light source is higher for smaller lean angles of the vehicle. Thus, according to the configuration of (2), the sub headlight light source can be turned on at a higher position by decreasing the reference value when the vehicle pitches forward. In this way, the effect of the forward pitching of the vehicle can be reduced. Specifically, the illumination range of the sub headlight light source can be suppressed from approaching closer to the vehicle as the vehicle pitches forward, and more distant illumination can be provided. This makes it possible to appropriately illuminate the target view of the operator while limiting the reduction of the illumination range inside of a curve.

(3) The sub-headlight unit of (1), wherein the reference value increases with increase in a backward pitch angle of the vehicle.

The sub headlight light source of the vehicle pitching backward is above where the sub headlight light source is in the level position, whereas the position of the sub headlight light source becomes lower as the lean angle of the vehicle increases.

Thus, according to the configuration of (3), the sub headlight light source can be turned on at a lower position by increasing the reference value when the vehicle pitches backward. In this way, the adverse effect of the backward pitching of the vehicle can be reduced. Specifically, the sub headlight light can be suppressed from unnecessarily illuminating the space above the horizontal line. This makes it possible to appropriately illuminate the target view of the operator while limiting the reduction of the illumination range inside of a curve.

(4) The sub-headlight unit of any one of (1) to (3), wherein the sub headlight light source has a cutoff line below the horizontal line of the sub headlight light source after the lean angle of the vehicle reaches a reference value varied according to the pitch angle of the vehicle.

According to the configuration of (4), the illumination range of the sub headlight light source can be suppressed from approaching the vehicle as the vehicle pitches forward, and more distant illumination can be provided. Further, the sub headlight light source can be suppressed from unnecessarily illuminating the space above the horizontal line. This makes it possible to more appropriately illuminate the target view of the operator while further limiting the reduction of the illumination range inside of a curve.

(5) The sub-headlight unit of any one of (1) to (4), wherein the reference value is varied according to the pitch angle of the vehicle to reduce the vertical distance between the cutoff line of the sub headlight light source and the horizontal line of the sub headlight light source upon the lean angle of the vehicle reaching the reference value.

According to the configuration of (5), the illumination range of the sub headlight light source can be suppressed from approaching the vehicle as the vehicle pitches forward, and more distant illumination can be provided. Further, the sub headlight light source can be suppressed from unnecessarily illuminating the space above the horizontal line. This makes it possible to more appropriately illuminate the target view of the operator while further limiting the reduction of the illumination range inside of a curve.

(6) A sub-headlight system for a vehicle that leans into turns,
the sub-headlight system comprising:

the sub-headlight unit of any one of (1) to (5);
a control unit that varies the brightness of the sub headlight light source according to a lean angle of the vehicle;
a first detection unit that detects a variable used to obtain a lean angle of the vehicle; and
a second detection unit that detects a variable used to obtain a pitch angle of the vehicle,
wherein the control unit turns on the sub headlight light source at a predetermined brightness when the lean angle of the vehicle obtained by using the result of the detection by the first detection unit reaches the reference value, and
wherein the control unit varies the reference value according to the pitch angle of the vehicle obtained by using the result of the detection by the second detection unit.

According to the configuration of (6), the reduction of the illumination range inside of a curve can be limited, and an AFS (Adaptive Front-Lighting System) can be established so that the target view of the operator can be appropriately illuminated.

(7) A vehicle that leans into turns, wherein the vehicle comprises the sub-headlight system of (6).

According to the configuration of (7), the reduction of the illumination range inside of a curve can be limited, and the target view of the operator can be appropriately illuminated.

The embodiment further discloses a sub-headlight unit for a vehicle that leans into turns, comprising:

a sub headlight light source;
a control unit for controlling the sub headlight light source;
a first detection unit for detecting a variable used to obtain a lean angle of the vehicle; and
a second detection unit for detecting a variable used to obtain a pitch angle of the vehicle,
wherein the control unit is adapted to turn on the sub headlight light source at a predetermined brightness when the lean angle of the vehicle obtained by using the result of the detection by the first detection unit reaches a reference value, and the control unit is adapted for varying the reference value according to the pitch angle of the vehicle obtained by using the result of the detection by the second detection unit.

The control unit is adapted for varying the brightness of the sub headlight light source according to the variable used to obtain a lean angle of the vehicle.

The control unit is adapted for decreasing reference value with increase in a forward pitch angle of the vehicle.

The control unit is adapted for increasing the reference value with increase in a backward pitch angle of the vehicle.

The sub headlight light source has a cutoff line below a horizontal line of the sub headlight light source after the variable used to obtain the lean angle of the vehicle reaches a reference value varied according to the pitch angle of the vehicle.

The control unit is adapted for varying the reference value according to the pitch angle of the vehicle to reduce the vertical distance between the cutoff line of the sub headlight light source and the horizontal line of the sub headlight light source upon variable used to obtain a lean angle of the vehicle reaching the reference value.

Moreover, it is provided a vehicle that comprises the sub-headlight a sub-headlight unit, wherein the sub headlight light source casts light forward and outward of the width direction of the vehicle on one side of the width direction of the vehicle.

Moreover, the embodiment also discloses a method for controlling a sub-headlight unit for a vehicle that leans into turns, comprising:

casting light forward and outward of the width direction of the vehicle on one side of the width direction of the vehicle by a sub headlight light source,
detecting a lean angle of the vehicle; and
detecting a pitch angle of the vehicle,
turning on the sub headlight light source at a predetermined brightness when the lean angle of the vehicle reaches a reference value, and varying said reference value according to the pitch angle of the vehicle.

The method for controlling a sub-headlight unit further comprises varying the brightness of the sub headlight light source according to a lean angle of the vehicle.

The method for controlling a sub-headlight unit further comprises decreasing the reference value with increase in a forward pitch angle of the vehicle.

The method for controlling a sub-headlight unit further comprises increasing the reference value with increase in a backward pitch angle of the vehicle.

The sub headlight light source has a cutoff line below a horizontal line of the sub headlight light source after the lean angle of the vehicle reaches a reference value varied according to the pitch angle of the vehicle.

The method for controlling a sub-headlight unit further comprises varying the reference value according to the pitch angle of the vehicle to reduce the vertical distance between the cutoff line of the sub headlight light source and the horizontal line of the sub headlight light source upon a lean angle of the vehicle reaching the reference value.

**Claims**

1.  A sub-headlight unit for a vehicle that leans into turns, comprising:

    a sub headlight light source (13La, 13Lb, 13Lc, 13Ra, 13Rb, 13Rc) adapted to cast light forward and outward of the width direction of the vehicle on one side of the width direction of the vehicle;
    a control unit for controlling the sub headlight light source
    (13La, 3Lb, 13Lc, 3Ra, 3Rb, 3Rc);
    a first detection unit (22) for detecting a variable used to obtain a lean angle of the
    vehicle; **characterized in that**
    a second detection unit (31) for detecting a variable used to obtain a pitch angle of the vehicle,
    wherein the control unit is adapted to turn on the sub headlight light source (13La,13Lb,13Lc,13Ra, l3Rb,13Rc) at a predetermined brightness when the lean angle of the vehicle obtained by using the result of the detection by the first detection unit (22) reaches a reference value, and the control unit is adapted for varying said reference value according to the pitch angle of the vehicle obtained by using the result of the detection by the second detection unit (31).

2.  A sub-headlight unit according to claim 1, wherein the control unit is adapted for varying the brightness of the sub headlight light source (13La,13Lb,13Lc,13Ra,13Rb,13Rc) according to the lean angle of the vehicle.

3.  A sub-headlight unit according to claim 1 or 2, wherein the control unit is adapted for decreasing reference value with increase in a forward pitch angle of the vehicle.

4.  A sub-headlight unit according to any one of the claims 1 to 3, wherein the control unit is adapted for increasing the reference value with increase in a backward pitch angle of the vehicle.

5.  A sub-headlight unit according to any one of claims 1 to 4, wherein the sub headlight light source (13La,13Lb,13Lc,13Ra,13Rb,13Rc) has a cutoff line below a horizontal line of the sub headlight light source (13La,13Lb,13Lc,13Ra,13Rb,13Rc) after the lean angle of the vehicle reaches a reference value varied according to the pitch angle of the vehicle.

6.  A sub-headlight unit according to any one of claims 1 to 5, wherein the control unit is adapted for varying the reference value according to the pitch angle of the vehicle to reduce the vertical distance between the cutoff line of the sub headlight light source (13La,13Lb,13Lc,13Ra,13Rb,13Rc) and the horizontal line of the sub headlight light source (13La,13Lb,13Lc,13Ra,13Rb,13Rc) upon the lean angle of the vehicle reaching the reference value.

7.  A vehicle that leans into turns, wherein the vehicle comprises the sub-headlight a sub-headlight unit according to at least one of the claims 1 to 6.

8.  A method for controlling a sub-headlight unit for a vehicle that leans into turns, comprising:

    casting light forward and outward of the width direction of the vehicle on one side of the width direction of the vehicle by a sub headlight light source (13La,13Lb,13Lc,13Ra,13Rb,13Rc),
    detecting a lean angle of the vehicle;
    detecting a pitch angle of the vehicle,
    turning on the sub headlight light source (13La,13Lb,13Lc, 13Ra,13Rb,13Rc) at a predetermined brightness when the lean angle of the vehicle reaches a reference value, and varying said reference value according to the pitch angle of the vehicle.

9.  A method for controlling a sub-headlight unit according to claim 8, further comprising varying the brightness of the sub headlight light source (13La,13Lb,13Lc,13Ra;13Rb,13Rc) according to a lean angle of the vehicle.

10. A method for controlling a sub-headlight unit according to claim 8 or 9, further comprising decreasing the reference value with increase in a forward pitch angle of the vehicle.

11. A method for controlling a sub-headlight unit according to any one of claims 8 to 10, further comprising increasing the reference value with increase in a backward pitch angle of the vehicle.

12. A method for controlling a sub-headlight unit according to any one of claims 8 to 11, wherein the sub headlight light source (13La,13Lb,13Lc,13Ra,13Rb,13Rc) has a cutoff line below a horizontal line of the sub headlight light source (13La,13Lb,13Lc,13Ra,13Rb,13Rc) after the lean angle of the vehicle reaches a reference value varied according to the pitch angle of the vehicle.

13. A method for controlling a sub-headlight unit according to claim 12, further comprising:

varying the reference value according to the pitch angle of the vehicle to reduce the vertical distance between the cutoff line of the sub headlight light source (13La,13Lb,13Lc,13Ra,13Rb,13Rc) and the horizontal line of the sub headlight light source (13La,13L6,13Lc,13Ra,13Rb,13Rc) upon a lean angle of the vehicle reaching the reference value.

## Patentansprüche

1. Eine Unter-Scheinwerfer-Einheit für ein Fahrzeug, das sich in Kurven legt, welche umfasst:

eine Unter-Scheinwerfer-Lichtquelle (13La, 13Lb, 13Lc, 13Ra, 13Rb, 13Rc) angepasst, um Licht nach vorne und außen in der Breiten-Richtung des Fahrzeugs auf einer Seite der Breiten-Richtung des Fahrzeugs zu verteilen;
eine Steuereinheit zur Steuerung der Unter-Scheinwerfer-Lichtquellen (13La, 13Lb, 13Lc, 13Ra, 13Rb, 13Rc);
eine erste Erfassungseinheit (22) zum Erfassen einer Variablen verwendet, um einen Neigungs-Winkel des Fahrzeugs zu erhalten, **dadurch gekennzeichnet, dass** eine zweite Erfassungseinheit (31) zum Erfassen einer Variablen verwendet, um einen Nick-Winkel des Fahrzeugs zu erfassen,
wobei die Steuereinheit angepasst ist, um die Unter-Scheinwerfer-Lichtquelle (13La, 13Lb, 13Lc, 13Ra, 13Rb, 13Rc) mit einer vorgegebenen Helligkeit anzuschalten,
wenn der Neigungs-Winkel des Fahrzeugs, erhalten durch die Verwendung des Ergebnisses der Erfassung durch die erste Erfassungseinheit (22), einen Referenzwert erreicht, und die Steuereinheit ist angepasst zum Variieren dieses Referenzwertes gemäß dem Nick-Winkel des Fahrzeugs, erhalten durch Verwendung des Ergebnisses der Erfassung durch die zweite Erfassungseinheit (31).

2. Eine Unter-Scheinwerfer-Einheit gemäß Anspruch 1, wobei die Steuereinheit angepasst ist zum Variieren der Helligkeit der Unter-Scheinwerfer-Lichtquelle (13La, 13Lb, 13Lc, 13Ra, 13Rb, 13Rc) gemäß dem Neigungs-Winkel des Fahrzeugs.

3. Eine Unter-Scheinwerfer-Einheit gemäß Anspruch 1 oder 2, wobei die Steuereinheit angepasst ist zur Verringerung des Referenzwertes mit Erhöhung in einem Vorwärts-Nick-Winkel des Fahrzeugs.

4. Eine Unter-Scheinwerfer-Einheit gemäß irgendeinem der Ansprüche 1 bis 3, wobei die Steuereinheit angepasst ist zum Erhöhen des Referenzwertes mit Erhöhung eines Rückwärts-Nick-Winkel des Fahrzeugs.

5. Eine Unter-Scheinwerfer-Einheit gemäß irgendeinem der Ansprüche 1 bis 4, wobei die Unter-Scheinwerfer-Lichtquelle (13La, 13Lb, 13Lc, 13Ra, 13Rb, 13Rc) eine Abschneid-Linie hat, unterhalb einer horizontalen Linie der Unter-Scheinwerfer-Lichtquelle (13La, 13Lb, 13Lc, 13Ra, 13Rb, 13Rc), nachdem der Neigungs-Winkel des Fahrzeugs einen Referenzwert erreicht, variiert gemäß dem Nick-Winkel des Fahrzeugs.

6. Eine Unter-Scheinwerfer-Einheit gemäß irgendeinem der Ansprüche 1 bis 5, wobei die Steuereinheit angepasst ist, um den Referenzwert gemäß dem Nick-Winkel des Fahrzeugs zu variieren, um den vertikalen Abstand zwischen der Abschneid-Linie der Unter-Scheinwerfer-Lichtquelle (13La, 13Lb, 13Lc, 13Ra, 13Rb, 13Rc) und der horizontalen Linie der Unter-Scheinwerfer-Lichtquelle (13La, 13Lb, 13Lc, 13Ra, 13Rb, 13Rc) zu reduzieren, wenn der Neigungs-Winkel des Fahrzeugs den Referenzwert erreicht.

7. Ein Fahrzeug, das sich in Kurven legt, wobei das Fahrzeug den Unter-Scheinwerfer einer Unter-Scheinwerfer-Einheit gemäß zumindest einem der Ansprüche 1 bis 6 umfasst.

8. Ein Verfahren zur Steuerung einer Unter-Scheinwerfer-Einheit für ein Fahrzeug, das sich in Kurven legt, welches umfasst:

Verteilen von Licht nach vorne und außen in einer Breiten-Richtung des Fahrzeugs auf einer Seite der Breiten-Richtung des Fahrzeugs durch eine Unter-Scheinwerfer-Lichtquelle (13La, 13Lb, 13Lc, 13Ra, 13Rb, 13Rc),
Erfassen eines Neigungs-Winkels des Fahrzeugs;
Erfassen eines Nick-Winkels des Fahrzeugs,
Anschalten der Unter-Scheinwerfer-Lichtquelle (13La, 13Lb, 13Lc, 13Ra, 13Rb,
13Rc) mit einer vorgegebenen Helligkeit, wenn der Neigungs-Winkel des Fahrzeugs einen Referenzwert erreicht und Variieren dieses Referenzwertes gemäß dem Nick-Winkel des Fahrzeugs.

9. Ein Verfahren zur Steuerung einer Unter-Scheinwerfer-Einheit gemäß Anspruch 8, das weiterhin umfasst, Variieren der Helligkeit der Unter-Scheinwerfer-Lichtquelle (13La, 13Lb, 13Lc, 13Ra, 13Rb, 13Rc) gemäß einem Neigungs-Winkel des Fahrzeugs.

10. Ein Verfahren zur Steuerung einer Unter-Scheinwerfer-Einheit gemäß Anspruch 8 oder 9, das weiterhin umfasst, Verringern des Referenzwertes mit Erhöhung eines Vorwärts-Nick-Winkels des Fahrzeugs.

11. Ein Verfahren zur Steuerung einer Unter-Scheinwerfer-Einheit gemäß irgendeinem der Ansprüche 8 bis 10, das weiterhin umfasst, Erhöhen des Referenzwertes mit Erhöhen eines Rückwärts-Nick-Winkels des Fahrzeugs.

12. Ein Verfahren zur Steuerung einer Unter-Scheinwerfer-Einheit gemäß irgendeinem der Ansprüche 8 bis 11, wobei die Unter-Scheinwerfer-Lichtquelle (13La, 13Lb, 13Lc, 13Ra, 13Rb, 13Rc) eine Abschneid-Linie unterhalb einer horizontalen Linie der Unter-Scheinwerfer-Lichtquelle (13La, 13Lb, 13Lc, 13Ra, 13Rb, 13Rc) hat, nachdem der Neigungs-Winkel des Fahrzeugs einen Referenzwert erreicht, variiert gemäß dem Nick-Winkel des Fahrzeugs.

13. Ein Verfahren zur Steuerung einer Unter-Scheinwerfer-Einheit gemäß Anspruch 12, das weiterhin umfasst:

Variieren des Referenzwertes gemäß dem Nick-Winkel des Fahrzeugs, um den vertikalen Abstand zwischen der Abschneid-Linie der Unter-Scheinwerfer-Lichtquelle (13La, 13Lb, 13Lc, 13Ra, 13Rb, 13Rc) und der horizontalen Linie der Unter-Scheinwerfer-Lichtquelle (13La, 13Lb, 13Lc, 13Ra, 13Rb, 13Rc) zu verringern, wenn ein Neigungs-Winkel des Fahrzeugs den Referenzwert erreicht.

**Revendications**

1. Sous-bloc optique pour un véhicule qui se penche dans les virages, comprenant :

une source lumineuse sous-bloc optique (13La, 13Lb, 13Lc, 13Ra, 13Rb, 13Rc) adaptée pour projeter de la lumière vers l'avant et vers l'arrière du sens de la largeur du véhicule sur un côté du sens de la largeur du véhicule ;
une unité de commande pour commander la source lumineuse sous-bloc optique (13La, 13Lb, 13Lc, 13Ra, 13Rb, 13Rc) ;
une première unité de détection (22) pour détecter une variable utilisée pour obtenir un angle d'inclinaison du véhicule ;
**caractérisé en ce que**
une seconde unité de détection (31) pour détecter une variable utilisée pour obtenir un angle d'inclinaison longitudinale du véhicule,
où l'unité de commande est adaptée pour mettre en marche la source lumineuse sous-bloc optique (13La, 13Lb, 13Lc, 13Ra, 13Rb, 13Rc) à une luminosité prédéterminée lorsque l'angle d'inclinaison du véhicule obtenu en utilisant le résultat de la détection par la première unité de détection (22) atteint une valeur de référence, et l'unité de commande est adaptée pour faire varier ladite valeur de référence selon l'angle d'inclinaison longitudinale du véhicule obtenu en utilisant le résultat de la détection par la seconde unité de détection (31).

**2.** Sous-bloc optique selon la revendication 1, où l'unité de commande est adaptée pour faire varier la luminosité de la source lumineuse sous-bloc optique (13La, 13Lb, 13Lc, 13Ra, 13Rb, 13Rc) selon l'angle d'inclinaison du véhicule.

**3.** Sous-bloc optique selon la revendication 1 ou 2, où l'unité de commande est adaptée pour réduire la valeur de référence selon l'augmentation d'un angle d'inclinaison longitudinale avant du véhicule.

**4.** Sous-bloc optique selon l'une quelconque des revendications 1 à 3, où l'unité de commande est adaptée pour élever la valeur de référence selon l'augmentation d'un angle d'inclinaison longitudinale vers l'arrière du véhicule.

**5.** Sous-bloc optique selon l'une quelconque des revendications 1 à 4, où la source lumineuse sous-bloc optique (13La, 13Lb, 13Lc, 13Ra, 13Rb, 13Rc) présente un seuil d'interruption situé en-dessous d'une ligne horizontale de la source lumineuse sous-bloc optique (13La, 13Lb, 13Lc, 13Ra, 13Rb, 13Rc) après que l'angle d'inclinaison du véhicule atteigne une valeur de référence qui varie selon l'angle d'inclinaison longitudinale du véhicule.

**6.** Sous-bloc optique selon l'une quelconque des revendications 1 à 5, où l'unité de commande est adaptée pour faire varier la valeur de référence selon l'angle d'inclinaison longitudinale du véhicule pour réduire la distance verticale entre le seuil d'interruption de la source lumineuse sous-bloc optique (13La, 13Lb, 13Lc, 13Ra, 13Rb, 13Rc) et la ligne horizontale de la source lumineuse sous-bloc optique (13La, 13Lb, 13Lc, 13Ra, 13Rb, 13Rc) au-dessus de l'angle d'inclinaison du véhicule atteignant la valeur de référence.

**7.** Véhicule qui se penche dans les virages, où le véhicule comprend le sous-bloc optique un sous-bloc optique selon au moins l'une des revendications 1 à 6.

**8.** Procédé de commande d'un sous-bloc optique pour un véhicule qui se penche dans les virages, comprenant :

la projection de lumière vers l'avant et vers l'arrière du sens de la largeur du véhicule sur un côté du sens de la largeur du véhicule par une source lumineuse sous-bloc optique (13La, 13Lb, 13Lc, 13Ra, 13Rb, 13Rc),
la détection d'un angle d'inclinaison du véhicule ;
la détection d'un angle d'inclinaison longitudinale du véhicule,
la mise en marche de la source lumineuse sous-bloc optique (13La, 13Lb, 13Lc, 13Ra, 13Rb, 13Rc) à une luminosité prédéterminée lorsque l'angle d'inclinaison du véhicule atteint une valeur de référence, et la variation de ladite valeur de référence selon l'angle d'inclinaison longitudinale du véhicule.

**9.** Procédé de commande d'un sous-bloc optique selon la revendication 8, comprenant en outre le fait de faire varier la luminosité de la source lumineuse sous-bloc optique (13La, 13Lb, 13Lc, 13Ra, 13Rb, 13Rc) selon un angle d'inclinaison du véhicule.

**10.** Procédé de commande d'un sous-bloc optique selon la revendication 8 ou 9, comprenant en outre la réduction de la valeur de référence selon l'augmentation dans un angle d'inclinaison longitudinale vers l'avant du véhicule.

**11.** Procédé de commande d'un sous-bloc optique selon l'une quelconque des revendications 8 à 10, comprenant en outre l'augmentation de la valeur de référence selon l'augmentation d'un angle d'inclinaison longitudinale vers l'arrière du véhicule.

**12.** Procédé de commande d'un sous-bloc optique selon l'une quelconque des revendications 8 à 11, où la source lumineuse sous-bloc optique (13La, 13Lb, 13Lc, 13Ra, 13Rb, 13Rc) présente un seuil d'interruption situé en-dessous d'une ligne horizontale de la source lumineuse sous-bloc optique (13La, 13Lb, 13Lc, 13Ra, 13Rb, 13Rc) après que l'angle d'inclinaison du véhicule atteigne une valeur de référence qui varie selon l'angle d'inclinaison longitudinale du véhicule.

**13.** Procédé de commande d'un sous-bloc optique selon la revendication 12, comprenant en outre :

le fait de faire varier la valeur de référence selon l'angle d'inclinaison longitudinale du véhicule pour réduire la distance verticale entre le seuil d'interruption de la source lumineuse sous-bloc optique (13La, 13Lb, 13Lc, 13Ra, 13Rb, 13Rc) et la ligne horizontale de la source lumineuse sous-bloc optique (13La, 13Lb, 13Lc, 13Ra, 13Rb, 13Rc) dès qu'un angle d'inclinaison du véhicule atteint la valeur de référence.

FIG.1

FIG.2

FIG.3 <u>10</u>

MAIN HEAD LIGHT

| HIGH BEAM LIGHT SOURCE | 11H | |
| LOW BEAM LIGHT SOURCE | 11L | <u>11</u> |

15

15B — BEAM SWITCH

15F — FLASHER SWITCH

26 — POWER SUPPLY

LEFT FLASHER — 14L

RIGHT FLASHER — 14R

20

22 — LEAN ANGLE SENSOR

23 — VEHICLE SPEED SENSOR

29 — STROKE SENSOR

30 — SEAT LOAD SENSOR

31 — PITCH ANGLE SENSOR

32 — BRAKE SWITCH

33 — THROTTLE POSITION SENSOR

34 — ENGINE SPEED SENSOR

35 — GEAR POSITION SENSOR

36 — CLUTCH SWITCH

CONTROLLER

SUB HEADLIGHT LIGHT SOURCE — 13La

SUB HEADLIGHT LIGHT SOURCE — 13Lb    <u>13L</u>

SUB HEADLIGHT LIGHT SOURCE — 13Lc

SUB HEADLIGHT LIGHT SOURCE — 13Ra

SUB HEADLIGHT LIGHT SOURCE — 13Rb    <u>13R</u>

SUB HEADLIGHT LIGHT SOURCE — 13Rc

13

ANSWERBACK MAIN BODY UNIT

21

REMOTE CONTROL KEY — 25

FIG.4A

BRIGHTNESS
(DUTY RATIO(%))

Q

0

0

K₁

K₂

K₃

LEAN ANGLE (° )

EP 2 676 839 B1

FIG.4B

FIG.4C

BRIGHTNESS
(DUTY RATIO(%))

Q

0

0    K₁+    K₂+    K₃+    LEAN ANGLE(° )

FIG.5

```
                    ┌─────────┐
                    │  START  │
                    └────┬────┘
                         │          S10
              YES   ╱────┴────╲
         ┌─────────┤ ENGINE INACTIVE? ├
         │         ╲─────┬────╱
         │              NO           S11
         │          ╱────┴────╲          NO
         │         │ VEHICLE AT REST? ├──────────┐
         │         ╲─────┬────╱                  │
         │              YES                       │
         └──────────┐                             │
                    │  S12                        │  S13
         ┌──────────┴──────────┐      ┌───────────┴──────────┐
         │ CALCULATE STATIC    │      │ CALCULATE AMOUNT OF  │
         │ PITCH ANGLE OF      │      │ CHANGE IN DYNAMIC    │
         │ VEHICLE             │      │ PITCH ANGLE OF       │
         └──────────┬──────────┘      │ VEHICLE              │
                    │                 └───────────┬──────────┘
                    │                             │
                    │                 ┌───────────┴──────────┐
                    │                 │ CORRECT STATIC PITCH │
                    │                 │ ANGLE BY USING       │
                    │                 │ AMOUNT OF CHANGE IN  │
                    │                 │ DYNAMIC PITCH ANGLE  │
                    │                 │ OF VEHICLE           │
                    │                 └───────────┬──────────┘
                    │    S15                      │  S14
              YES  ╱┴────────╲
         ┌────────┤ PITCHING FORWARD? ├◄──────────┘
         │        ╲─────┬────╱
         │             NO    S17
         │         ╱────┴────╲        YES             S18
         │        │ PITCHING BACKWARD? ├──────────┐
         │        ╲─────┬────╱                    │
         │             NO                         │
  ┌──────┴────────┐                      ┌─────────┴──────┐
  │ DECREASE      │                      │ INCREASE       │
  │ REFERENCE     │                      │ REFERENCE      │
  │ VALUE         │                      │ VALUE          │
  │ ACCORDING TO  │                      │ ACCORDING TO   │
  │ PITCH ANGLE   │                      │ PITCH ANGLE    │
  └──────┬────────┘                      └─────────┬──────┘
 S16     │                                         │
         └─────────────┬───────────────────────────┘
                       │
                  ┌────┴────┐
                  │   END   │
                  └─────────┘
```

FIG.6A

FIG.6B

FIG.7A

FIG.7B

FIG.8A

FIG.8B

FIG.8C

**EP 2 676 839 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2012022658 A1
- EP 2030880 A1
- WO 2010061651 A